# EUROPÄISCHE PATENTSCHRIFT

(11) **EP 2 930 827 B1**
(45) Veröffentlichungstag und Bekanntmachung des Hinweises auf die Patenterteilung: **27.07.2016**
(21) Anmeldenummer: 14164172.0
(22) Anmeldetag: 10.04.2014
(51) Int. Cl.: H02K 5/18, H02K 5/20, H02K 9/06, H02K 9/14

(54) **Elektrische Maschine mit Strömungskühlung**
Electric machine with flow cooling
Machine électrique à refroidissement par convection

(43) Veröffentlichungstag der Anmeldung: 14.10.2015
(73) Patentinhaber: Siemens Aktiengesellschaft, 80333 München (DE)
(72) Erfinder: Weiß, Sebastian, 90522 Oberasbach (DE); Deeg, Christian, 90518 Altdorf (DE); Eichinger, Benjamin, 90459 Nürnberg (DE); Joseph, Eric, 90489 Nürnberg (DE); Scharf, Uwe, 90763 Fürth (DE); Scherer, Matthias, 90459 Nürnberg (DE); Stegherr, Michael, 90491 Nürnberg (DE)

(56) Entgegenhaltungen:
- EP-A1- 1 100 182
- EP-A2- 2 458 717
- WO-A1-95/02758
- WO-A1-2008/138379
- WO-A2-2012/003208
- US-A1- 2012 126 641
- US-B1- 6 317 963

## Beschreibung

Die vorliegende Erfindung betrifft eine elektrische Maschine mit einem Stator mit einer Statoroberfläche, welcher ein Blechpaket aufweist. Darüber hinaus umfasst die Erfindung ein Verfahren zum Kühlen der elektrischen Maschine.

Generell werden elektrische Maschinen über einen axial über die Oberfläche streichenden Luftstrom gekühlt. Um das Wärmeabfuhrvermögen zu maximieren ist die Oberfläche durch Rippen vergrößert. Der Wärmeübergangskoeffizient zwischen Statoroberfläche und Luftstrom ist von der Strömungsgeschwindigkeit an den Rippen abhängig und kann nicht beliebig erhöht werden, da eine hohe Strömungsgeschwindigkeit einen Maschinenlüfter mit hoher Leistungsaufnahme bedingt und somit der Wirkungsgrad der Maschine verringert wird. Die Geräuschemission steigt ebenfalls mit der Strömungsgeschwindigkeit an und darf bestimmte Werte nicht übersteigen.

Aus der WO 2008/138379 A1 geht eine elektrische Maschine mit einem Luft-Kühlsystem hervor. Dabei umfasst die elektrische Maschine einen Stator mit Statorwicklungen, ein Gehäuse, welches den Stator umgibt, einen Rotor und einen Luftkanal. Der Luftkanal weist ferner Löcher auf, durch welche ein Kühlmedium aus dem Luftkanal auf die Statorwicklungen geleitet wird.

In der EP 2 458 717 A2 ist ein elektrischer Motor beschrieben. Der elektrische Motor umfasst einen Rahmen, einen Stator, welcher innerhalb des Rahmens angeordnet ist, einen Rotor, welcher ebenfalls in dem Rahmen angeordnet ist, und eine Kühleinheit. Die Kühleinheit zum Kühlen des elektrischen Motors fördert ein Kühlfluid in den Rahmen.

Aus der WO 95/02758 A1 geht ein Hilfsenergie-System für ein elektrisches Hybridfahrzeug hervor. Das System umfasst ein Motor-Ausgleichssystem, eine integrierte Lichtmaschine/Star ter, ein Wärmemanagementsystem, ein Lärm-Vibrations-Härtesteuerungssystem, ein Emissions-/Kraftstoffverbrauchssystem, eine APU Master-Steuereinheit und ein Fahrzeugsteuerungssystem.

In der US 2012/0126641 A1 ist eine Stator-Kühlvorrichtung beschrieben. Die Stator-Kühlvorrichtung umfasst einen zylindrischen Stator, der eine Hauptkörperdrehachse der rotierenden elektrischen Maschine als eine zentrale Achse verwendet. Ferner weist die Stator-Kühlvorrichtung einen Kühlmittelkanal auf, in dem ein Kühlmedium gefördert wird. Über ein Einspritzloch wird das Kühlmedium in den Kühlmittelkanal eingespritzt.

Die Aufgabe der Erfindung besteht darin, die Strömungsführung des Kühlmittels und damit die Kühlung einer elektrischen Maschine zu verbessern.

Diese Aufgabe wird erfindungsgemäß durch die Gegenstände der unabhängigen Patentansprüche gelöst. Vorteilhafte Weiterbildungen der Erfindung ergeben sich durch die Merkmale der abhängigen Patentansprüche.

Erfindungsgemäß wird diese Aufgabe gelöst durch eine elektrische Maschine umfassend:
- einen Stator mit einer Statoroberfläche, welcher ein Blechpaket aufweist;
- eine Abdeckung, welche den Stator umgibt;
- einen Einlasskanal mit einem Kühlmitteleinlass, wobei der Einlasskanal zwischen der Abdeckung und einer zwischen der Abdeckung und der Statoroberfläche angeordneten Wandung ausgebildet ist, die sich axial von einem ersten axialen Rand bis zu einem zweiten axialen Rand der Abdeckung erstreckt. Mit anderen Worten erstreckt sich die Wandung entlang des gesamten zu kühlenden Stators.
- einem Kühlkanal mit einem Kühlmittelauslass, wobei der Kühlkanal zwischen der Wandung und der Statoroberfläche ausgebildet ist. Mit anderen Worten umgibt der Einlasskanal den Kühlkanal.

Zudem weist die Wandung ein Düsenfeld auf, d.h. eine oder mehrere Durchgangsöffnungen von dem Einlasskanal in den Kühlkanal.

Zur Steigerung des Wärmeabfuhrvermögens sind Kühlrippen auf der Statoroberfläche vorgesehen. Erfindungsgemäß weist der Stator am Umfang mindestens eine Kontur in Form von einer Längsrippe oder einer Nadelrippe auf. In dem Fall, dass das Blechpaket die Statoroberfläche bildet hat das den Vorteil, dass die Rippen durch vorgefertigte und gestanzte Bleche gefertigt werden können und damit ein Verfahrensschritt und Kosten eingespart werden können.

Erfindungsgemäß weist das Düsenfeld in einer Variante zumindest eine Runddüse und/oder zumindest ein Loch auf, wobei die Nadelrippe fluchtend zu der zumindest einen Runddüse oder zu dem zumindest einen Loch angeordnet ist. In einer anderen Variante mit den Schlitzdüsen und/oder den Schlitzen ist eine Längsrippe fluchtend zu der zumindest einen Schlitzdüse oder dem zumindest einen Schlitz angeordnet. Mit fluchtend ist hier gemeint, dass sich die Rippen direkt gegenüber der Öffnung der Düsen, d.h. der Schlitzdüse und/oder des Schlitzes und/oder der Runddüse und/oder des Loches, befinden und die radial auf die Rippen auftreffende Kühlmittelströmung von den Düsen kommend axial durch ihre Form umlenken können. Die Kühlrippen haben den Vorteil, dass sie die Statoroberfläche vergrößern und damit die Kühlleistung zusätzlich steigern können. Eine verbesserte Kühlleitung steigert den Wirkungsgrad der elektrischen Maschine.

Im Betrieb der elektrischen Maschine wird folgendes erfindungsgemäß bereitgestellte Verfahren zum Kühlen einer elektrischen Maschine umgesetzt:
- Axiales Fördern oder Führen eines Kühlmittelstroms mittels des Einlasskanals;
- Umlenken des Kühlmittelstroms in radiale Richtung durch das jeweilige Düsenfeld; wobei
- der Kühlmittelstrom aufgrund des Umlenkens durch das jeweilige Düsenfeld in eine Prallströmung auf der Statoroberfläche übergeht; und
- Umlenken des Kühlmittelstroms in axiale Richtung durch die Form der Rippen hin zum Kühlmittelauslass.

Anschließend kann der erwärmte Kühlmittelstrom durch den Kühlmittelkanal aus der elektrischen Maschine hinausgeführt werden.

Eine Prallströmung kennzeichnet sich dadurch aus, dass die Strömung z.B. des Kältemittels zunächst linear aus einer Öffnung z.B. einer Düse austritt, also radial auf die Oberfläche, z.B. eine Statoroberfläche, zuströmt, anschließend auf die Oberfläche prallt und dabei axial und/oder in Umfangsrichtung in eine Richtung mit dem geringsten Strömungswiderstand umgelenkt wird. Durch die Prallströmung ergibt sich der Vorteil, dass an der Statoroberfläche ein bis zu vierfach höherer Wärmeübergangskoeffizient als bei einer konventionellen Längsströmung erreicht werden kann.

Der Einlasskanal und der Kühlkanal sind an einem axialen Rand geschlossen, sodass sich durch den Kühlmittelstrom, welcher durch ein Belüftungselement erzeugt werden kann, in dem Einlasskanal und dem Kühlkanal ein Staudruck bilden kann. Der Einlasskanal kann dabei beispielsweise durch den zweiten axialen Rand der Abdeckung, der Kühlkanal beispielsweise an dem ersten axialen Rand der Abdeckung geschlossen sein. Im Einlasskanal kann dieser Druck dazu führen, dass der Kältemittelstrom von dem Einlasskanal durch das Düsenfeld strömen kann. Im Kühlkanal dient der Staudruck dazu, den Kühlmittelstrom zum Kühlmittelauslass zu fördern. Als Kühlmittel kann beispielsweise Luft oder ein anderes Kühlfluid, insbesondere ein Gas, eingesetzt werden.

Eine weitere Ausführungsform sieht vor, dass das Düsenfeld zumindest eine Runddüse und/oder zumindest ein Loch und/oder zumindest eine Schlitzdüse und/oder zumindest einen Schlitz aufweist. Der Stator der elektrischen Maschine kann somit mit einem Düsenfeld aus Runddüsen und/oder Schlitzdüsen eingehüllt sein, sodass auf der Statoroberfläche ein Strömungsprofil in Form einer gerichteten Prallströmung ausgebildet werden kann, sodass eine gute Oberflächenkühlung gewährleistet ist. Das Düsenfeld kann dabei auch durch Löcher und/oder Schlitze in der Wandung ausgestaltet sein. Sogenannte Lochbleche und/oder Schlitzbleche können ein für eine Prallströmung ausreichendes Strömungsprofil des Kühlmittels. Lochbleche und/oder Schlitzbleche haben den Vorteil, dass sie einfach zu fertigen sind.

Die Runddüsen und/oder Schlitzdüsen bilden bevorzugt ausgehend von der Wandung einen Düsenhals aus. Das Kühlmittel, insbesondere Luft, kann mittels eines Belüftungselements durch den Einlasskanal axial von dem Kühlmitteleinlass dem Düsenfeld zugeführt werden. Nach dem Durchströmen der Runddüse und/oder der Schlitzdüse prallt der Kühlmittelstrom auf die Statoroberfläche und nimmt dabei die Verlustwärme der elektrischen Maschine auf. An den Stellen, an denen die Strömungen der einzelnen Düsen auf der Statoroberfläche aufeinandertreffen wird der Kühlmittelstrom seitlich entlang der Statoroberfläche und dann radial nach außen gelenkt, wo sie im Bereich der Düsenhälse entlang der Wandung, gegenüber der Statoroberfläche, axial zum Kühlmittelauslass strömt. Diese Ausgestaltungsform der Kühlung mittels der Prallströmung hat den Vorteil, dass die Kühlleistung gesteigert wird, dadurch dass die Strömung einen geringen Druckverlust und damit geringe Reibungsverluste aufweist. Geringe Reibungsverluste führen zu höheren Strömungsgeschwindigkeiten des Kühlmittels und verbessern somit den Wärmeübergang.

Die Anordnung der Düsen, d.h. der Runddüsen und/oder der Löcher und/oder der Schlitzdüsen und/oder der Schlitze, zueinander und der Abstand zwischen den Düsen zueinander und der Durchmesser der Düsen ist so bevorzugt gewählt, dass mittels des Staudrucks in dem Einlasskanal eine Strömung des Kühlmittels durch das Düsenfeld erreicht werden kann, sodass sich auf der Statoroberfläche eine Prallströmung ausbildet, die die gewünschte Kühlleistung aufweist.

In vorteilhafter Weise können die zumindest eine Schlitzdüse und/oder der zumindest eine Schlitz jeweils axial verlaufen. Die Schlitzdüsen und/oder die Schlitze können sich über die gesamte Länge der Wandung, d.h. axial von einem ersten axialen Rand bis zu einem zweiten axialen Rand der Abdeckung, erstrecken. Diese axiale Ausrichtung der Schlitzdüsen und/oder Schlitze hat den Vorteil, dass eine geringere Anzahl an Düsen, z.B. im Vergleich zur Anzahl der Runddüsen, erforderlich ist und damit Material und Kosten eingespart werden können. Löcher und Runddüsen sind für eine höhere statische Stabilität vorteilhaft.

In vorteilhafter Weise kann der Einlasskanal ausgehend von dem Kühlmitteleinlass entlang seiner axialen Erstreckung in radialer Richtung verjüngend ausgestaltet sein. Mit anderen Worten kann sich die radiale Querschnittsfläche des Einlasskanals ausgehend vom Kühlmitteleinlass und/oder dem ersten axialen Rand solange verringern, bis die Querschnittsfläche des Einlasskanals am gegenüber liegenden Ende, d.h. dem zweiten axialen Rand der Abdeckung, ein Minimum erreicht. Daraus ergibt sich der Vorteil, dass eine gleichmäßige Verteilung des Kühlmittels über den Einlasskanal ermöglicht und durch jede Düse ein gleicher Volumenstrom des Kühlmittels, z.B. nach dem Pinolenprinzip, erzielt werden kann.

In einer weiteren Ausführungsform kann die elektrische Maschine ein Belüftungselement, insbesondere einen Lüfter, zum aktiven Erzeugen eines Kühlmittelstroms aufweisen, wobei der Kühlmittelstrom auf den Kühlmitteleinlass gerichtet ist. Bei dem Belüftungselement kann es sich um einen Eigenlüfter der elektrischen Maschine handeln, der an der Welle an der elektrischen Maschine, z.B. an dem ersten axialen Rand, angeordnet ist und durch die Welle angetrieben wird. Alternativ zur Verwendung eines Eigenlüfters kann ein Fremdlüfter eingesetzt werden, welcher ebenfalls an einem axialen Rand, vorzugsweise dem ersten axialen Rand, der Welle angeordnet sein kann. In vorteilhafter Weise kann der Fremdlüfter auch an der Abdeckung angeordnet sein oder in die Abdeckung integriert sein. Somit befindet sich beispielsweise der Kühlmitteleinlass direkt gegenüber der Wandung d.h. dem Düsenfeld, d.h. dass eine Öffnung an einer bestimmten Stelle in der Abdeckung vorgesehen ist, in die ein Lüfter positioniert oder über der eine Einrichtung für ein Belüftungselement vorgesehen werden kann, sodass ein Kältemittelstrom auch radial zugeführt werden kann.

Der Stator der elektrischen Maschine kann entweder gehäuselos oder mit Gehäuse ausgestaltet sein. Bei der gehäuselosen Statorausführung bildet das Blechpaket die Statoroberfläche. Hierbei prallt der Kühlmittelstrom direkt auf das Blechpaket. Das hat den Vorteil, dass kein Wärmewiderstand zwischen durch ein Gehäuse gegeben ist. Die Statorbleche können dabei durch mindestens eine Halterung stabilisiert werden.

In vorteilhafter Weise kann der Stator zusätzlich ein Gehäuse mit einer Gehäuseoberfläche aufweisen, welche die Statoroberfläche bildet, wobei das Gehäuse das Blechpaket umgibt. Das zusätzliches Statorgehäuse hat den Vorteil, dass es das Blechpaket stabilisiert und keine Maßnahmen zur Stabilisieren für das Blechpaket getroffen werden müssen wie für den Fall, dass das Blechpaket von keinem Gehäuse umgeben ist.

Die zuvor in Zusammenhang mit der erfindungsgemäßen elektrischen Maschine beschriebenen Vorteile und Weiterbildungen können auf das erfindungsgemäße Verfahren übertragen werden.

Im Folgenden sind Ausführungsbeispiele der Erfindung beschrieben. Es zeigen:
- FIG 1: eine schematische Darstellung eines Querschnitts einer Ausführungsform der erfindungsgemäßen elektrischen Maschine;
- FIG 2: eine schematische Darstellung einer elektrischen Maschine mit Düsenfeld;
- FIG 3: eine schematische Darstellung einer Runddüse und einer Nadelrippe auf der Statoroberfläche;
- FIG 4: eine schematische Darstellung einer Schlitzdüse und einer Längsrippe auf der Statoroberfläche;
- FIG 5: eine schematische Schnittdarstellung der elektrischen Maschine mit Düsenfeld und Kühlrippen, und
- FIG 6: eine schematische Schnittdarstellung der elektrischen Maschine mit einer Ausführungsform des Einlasskanals.

Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsform jeweils einzelne, unabhängig voneinander betrachtete Merkmale der Erfindung dar, welche die Erfindung jeweils auch unabhängig voneinander weiterbilden und damit auch einzeln oder in einer als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

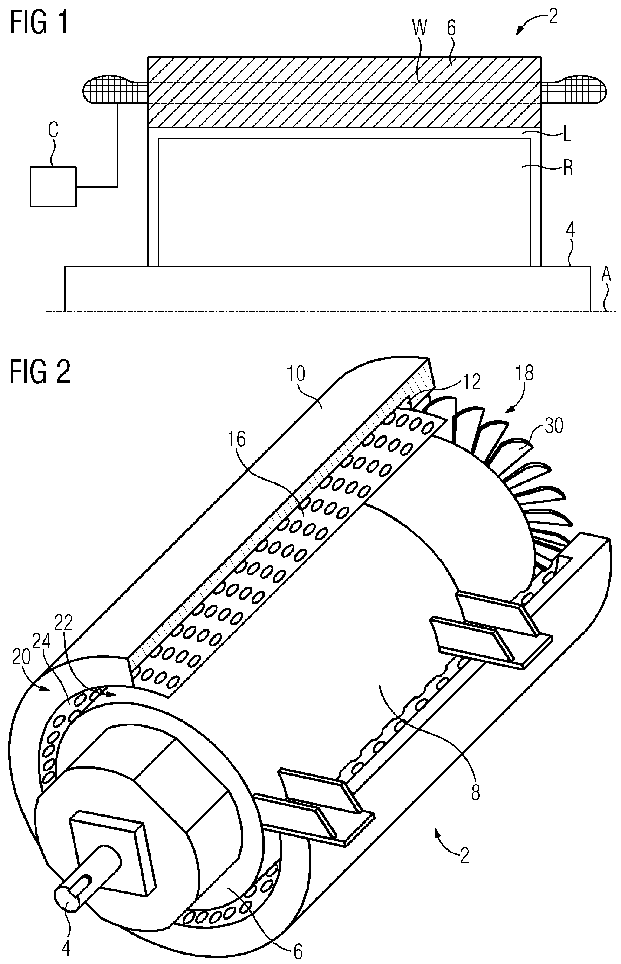

In FIG 1 ist ein allgemeiner Aufbau einer elektrischen Maschine dargestellt. Gezeigt ist eine elektrische Maschine 2, bei der es sich um die erfindungsgemäße elektrische Maschine handeln kann. Die elektrische Maschine 2 kann eine Asynchronmaschine oder eine Synchronmaschine sein. In FIG 1 stellt eine Rotationsachse A auch eine Symmetrieachse der Darstellung dar. Die elektrische Maschine 2 umfasst einen Stator 6, in welchem Wicklungen W elektrischer Spulen angeordnet sind, wobei in FIG 1 nur eine der Wicklungen W dargestellt ist. Die Wicklungen W werden durch ein Drehstromquelle C abwechselnd bestromt, wodurch im Inneren des Stators 6 ein magnetisches Drehfeld in einem Luftspalt L der elektrischen Maschine 2 entsteht. Die Drehstromquelle C kann beispielsweise ein gesteuerter Wechselrichter oder ein festfrequentes öffentlicher elektrisches Versorgungsnetz oder ein Frequenzumrichter sein. Im Inneren des Stators 6 befindet sich ein Rotor R, der drehfest mit einer Welle 4 verbunden ist. Die Welle 4 ist um die Rotationsachse A drehbar in dem Stator 6 gelagert.

In FIG 2 ist die elektrische Maschine 2 genauer dargestellt. Bei der elektrischen Maschine 2 kann es sich beispielsweise um einen Motor oder einen Generator handeln. Die elektrische Maschine 2 weist unter anderem eine Welle 4, einen Rotor (hier nicht dargestellt) und einen Stator 6 mit einer Statoroberfläche 8 auf, welche von einer Abdeckung 10 umgeben sind. Der Stator 6 weist zudem ein Blechpaket (hier nicht dargestellt) auf. Der Stator 6 kann zusätzlich ein Gehäuse mit einer Gehäuseoberfläche aufweisen. Somit kann die Statoroberfläche 8 entweder der durch das Blechpacket gebildeten Oberfläche oder der Gehäuseoberfläche entsprechen. Die elektrische Maschine 2 umfasst zudem einen Einlasskanal 12 mit einem Kühlmitteleinlass 14 (in FIG 2 nicht dargestellt) und einen Kühlkanal 22 mit einem Kühlmittelauslass 24. Der Einlasskanal 12 ist zwischen der Abdeckung 10 und einer zwischen der Abdeckung 10 und der Statoroberfläche 8 angeordneten Wandung 16 ausgebildet. Die Wandung 16 erstreckt sich dabei axial von einem ersten axialen Rand 18 bis zu einem zweiten axialen Rand 20 der Abdeckung 10. Der Kühlkanal 22 ist zwischen der Wandung 16 und der Statoroberfläche 8 ausgebildet.

Zur Bereitstellung eines Kühlmittelstromes kann ein Belüftungselement 30, z.B. ein Eigenlüfter, an dem ersten axialen Rand 18 an der Welle 4 angeordnet sein. Das Kühlmittel, insbesondere Luft, kann dabei mittels des Belüftungselements 30 z.B. den Eigenlüfter, durch den Einlasskanal 12 axial von dem ersten axialen Rand 18 der elektrischen Maschine 2 dem Düsenfeld der Wandung 16 zugeführt werden. Nach dem Durchströmen des Düsenfeldes, auf dessen Ausgestaltung im Folgenden näher eingegangen wird, prallt der Kühlmittelstrom auf die Statoroberfläche 8 und nimmt dabei die Verlustwärme der elektrischen Maschine 2 auf. An den Stellen, an denen die Strömungen der einzelnen Düsen auf der Statoroberfläche 8 aufeinandertreffen wird der Kühlmittelstrom radial nach außen gelenkt, wo sie im Bereich der Düsenhälse entlang der Wandung 16, gegenüber der Statoroberfläche 8, axial zum Kühlmittelauslass 24 strömen kann. Bei dem Belüftungselement 30 kann es sich auch um einen Fremdlüfter handeln, welcher beispielsweise in die Abdeckung 10 integriert sein kann, um einen radialen Kühlmittelstrom erzeugen zu können.

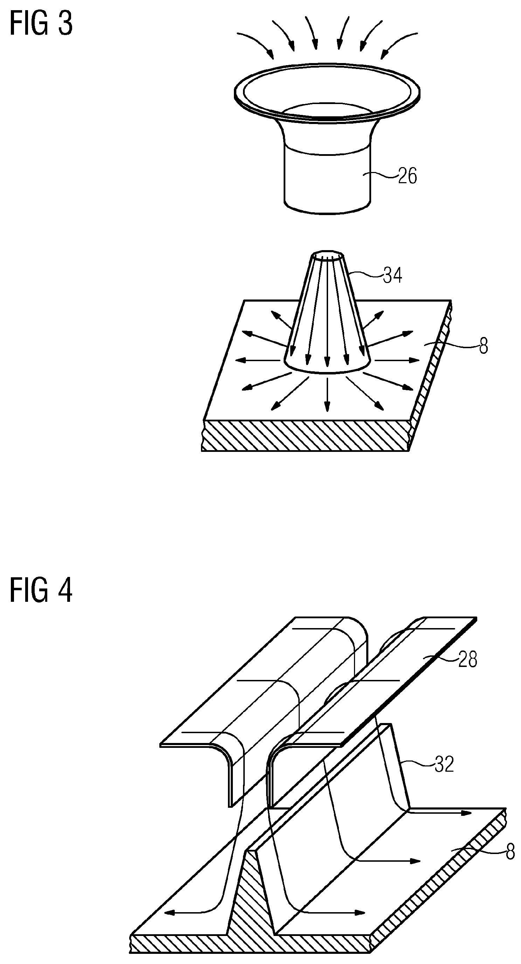

Zur Steigerung des Wärmeabfuhrvermögens können Kühlrippen auf der Statoroberfläche 8 vorgesehen sein. Eine Ausführungsform sieht vor, dass der Stator 6 am Umfang mindestens eine Kontur in Form von einer Längsrippe 32 und/oder einer Nadelrippe 34 aufweist. Dazu sind in FIG 3 und FIG 4 jeweils eine schematische Darstellung einer Runddüse 26 und einer Nadelrippe 34, sowie einer Schlitzdüse 28 und einer Längsrippe 32 auf der Statoroberfläche 8 dargestellt. Die Nadelrippe 34 ist dabei fluchtend zu der Runddüse 26 oder zu dem Loch angeordnet. In der Ausführung mit den Schlitzdüsen 28 und/oder den Schlitzen kann eine Längsrippe 32 fluchtend zu der Schlitzdüse 28 oder dem Schlitz angeordnet sein. Mit fluchtend ist hier gemeint, dass sich die Rippen direkt gegenüber der Öffnung der Düsen, d.h. der Schlitzdüse 28 und/oder des Schlitzes und/oder der Runddüse 26 und/oder des Loches, befinden und die radial auf die Rippen auftreffende Kühlmittelströmung von den Düsen kommend axial durch ihre Form umlenken können.

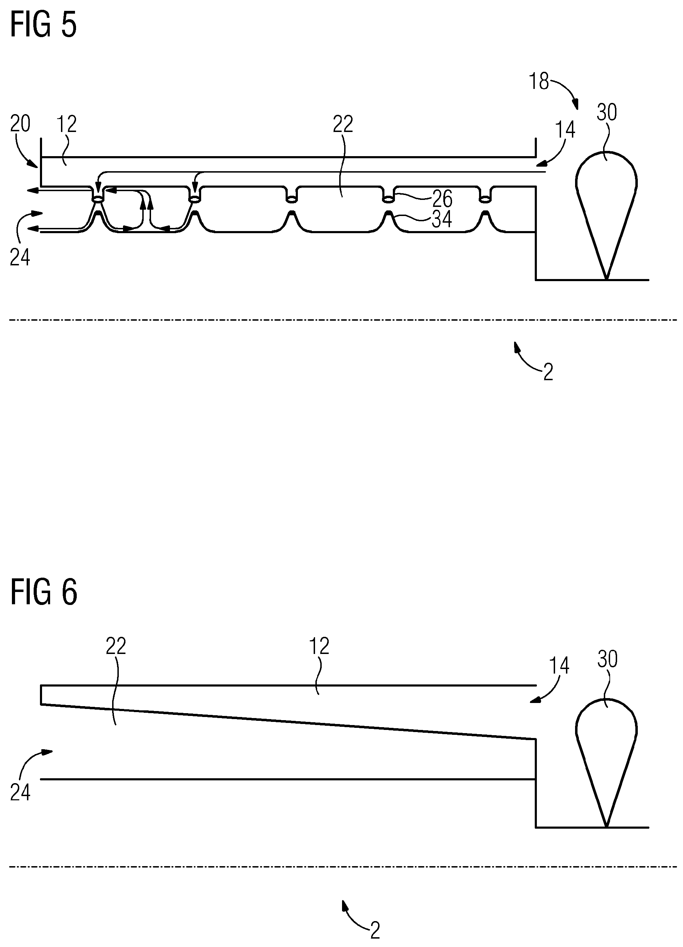

FIG 5 zeigt eine schematische Schnittdarstellung der elektrischen Maschine 2 mit Düsenfeld und Kühlrippen. Der Einlasskanal 12 und der Kühlkanal 22 sind an einem Ende abgeschlossen, sodass sich durch den Kühlmittelstrom, welcher durch ein Belüftungselement 30 erzeugt werden kann, in dem Einlasskanal 12 und dem Kühlkanal 22 sich durch den Kühlmittelstrom ein Staudruck bilden kann. Im Einlasskanal 12 führt dieser Druck dazu, dass der Kältemittelstrom von dem Einlasskanal 12 durch das Düsenfeld strömen kann. Im Kühlkanal 22 dient der Staudruck dazu, den Kühlmittelstrom zum Kältemittelauslass 24 zu fördern. Die Pfeile zeigen beispielhaft die Strömungslinien des Kühlmittelstromes. Nach dem Durchströmen der Düsen, in diesem Fall der Runddüsen 26, strömt der Kühlmittelstrom radial auf die Rippen, hier Nadelrippen 34, und wird durch ihre Form zunächst axial umgelenkt. An den Stellen, an denen die Strömungen der einzelnen Runddüsen 26 auf der Statoroberfläche 8 aufeinandertreffen wird der Kühlmittelstrom wieder radial nach außen gelenkt, wo er im Bereich der Düsenhälse entlang der Wandung 16, gegenüber der Statoroberfläche 8, axial zum Kühlmittelauslass strömt.

In FIG 6 ist eine schematische Schnittdarstellung der elektrischen Maschine mit einer Ausführungsform des Einlasskanals 12 dargestellt. Wie in FIG 6 dargestellt, verjüngt sich der Einlasskanal 12 ausgehend von dem Kühlmitteleinlass 14 entlang seiner axialen Erstreckung in radialer Richtung. Mit anderen Worten kann sich die radiale Querschnittsfläche des Einlasskanals 12 ausgehend vom Kühlmitteleinlass 14 solange verringern, bis die Querschnittsfläche des Einlasskanals 12 am gegenüber liegenden Ende, d.h. dem zweiten axialen Rand 20 der Abdeckung 10, ein Minimum erreicht. Durch diese geometrische Ausgestaltung kann eine gleichmäßige Verteilung des Kühlmittels in dem Einlasskanal 12 ermöglicht und durch jede Düse ein gleicher Volumenstrom des Kühlmittels erzielt werden.

Insgesamt geht somit eine elektrische Maschine mit einer Prallströmungskühlung hervor. Dabei ist der Stator der elektrischen Maschine mit einem Düsenfeld aus Rund- und/oder Schlitzdüse eingehüllt, das auf der Statoroberfläche eine Prallströmung erzeugt. Solche Düsenfelder werden z.B. in der Produktionstechnik eingesetzt. Die Düsen müssen nicht unbedingt als solche ausgeformt sein, da ein einfaches Lochblech bzw. Schlitzblech zu dem gleichen Strömungsbild ohne nennenswerte Zusatzdruckverluste führt. Bei einer Prallströmung kann durch den Pralleffekt an der Statoroberfläche ein ca. vierfach höherer Wärmeübergangskoeffizient als bei Längsströmung erreicht werden. Für den Wärmeübergang kann also Oberfläche durch Übergangskoeffizient ersetzt werden. Bei einer möglichen Ausführungsform kann Luft mittels eines Eigen- oder Fremdlüfters durch einen Einlasskanal axial vom einen Ende der Maschine dem Düsenfeld zugeführt werden. An den Stellen, an denen die Wandströmung der einzelnen Düsen auf der Statoroberfläche aufeinandertreffen kann die Luft radial nach außen gelenkt werden, wo sie im Bereich der Düsenhälse zwischen diesen axial zum anderen Ende der Maschine strömen und dort austreten kann. Im Falle einer radialen Luftzuführung kann die Luft auch an beiden axialen Enden der Maschine austreten. Dies kann auch bedingt bei axialer Luftzuführung möglich sein, wobei hier wegen der Kreuzung der Luftströme Zu- und Abluft durch geeignete konstruktive Maßnahmen voneinander getrennt werden können. Der Stator kann entweder gehäuselos oder gehäusebehaftet ausgeführt werden. Im ersten Fall prallt die Kühlluft direkt auf das Blechpaket, welches im einfachsten Fall zylindrisch ausgeführt sein kann. Für den gesamten Wärmepfad kann hier vorteilhaft sein, dass kein Wärmewiderstand zwischen Gehäuse und Blechpaket und durch das Gehäuse selbst enthalten ist. Zur weiteren Steigerung des Wärmeabfuhrvermögens können Kühlrippen auf der Statoroberfläche vorgesehen sein. In der Ausführungsform mit den Schlitzdüsen können parallel zur Maschinenachse Längsrippen fluchtend zu den Schlitzen verlaufen. Dies kann auch bei der gehäuselosen Variante durch gestanzte Kühlrippen möglich sein. Bei der gehäusebehaftet Variante können auch Nadelrippen in der Flucht der Runddüsen angeordnet werden.

## Patentansprüche

1. Elektrische Maschine (2) umfassend:
- einen Stator (6) mit einer Statoroberfläche (8), welcher ein Blechpaket aufweist;
- eine Abdeckung (10), welche den Stator (6) umgibt;
- einen Einlasskanal (12) mit einem Kühlmitteleinlass (14), wobei der Einlasskanal (12) zwischen der Abdeckung (10) und einer zwischen der Abdeckung (10) und der Statoroberfläche (8) angeordneten Wandung (16) ausgebildet ist, die sich axial von einem ersten axialen Rand (18) bis zu einem zweiten axialen Rand (20) der Abdeckung (10) erstreckt, wobei die Wandung (16) ein Düsenfeld aufweist;
- einen Kühlkanal (22) mit einem Kühlmittelauslass (24), wobei der Kühlkanal (22) zwischen der Wandung (16) und der Statoroberfläche (8) ausgebildet ist, **dadurch gekennzeichnet, dass**
- der Stator (6) am Umfang mindestens eine Kontur in Form einer Längsrippe (32) aufweist, wobei das Düsenfeld zumindest eine Schlitzdüse (28) und/oder zumindest einen Schlitz aufweist, wobei die Längsrippe (32) fluchtend zu der zumindest einen Schlitzdüse (28) oder dem zumindest einen Schlitz angeordnet ist; oder
- der Stator (6) am Umfang mindestens eine Kontur in Form einer Nadelrippe (34) aufweist, wobei das Düsenfeld zumindest eine Runddüse (26) und/oder zumindest ein Loch aufweist, wobei die Nadelrippe (34) fluchtend zu der zumindest einen Runddüse (26) oder zu dem zumindest einen Loch angeordnet ist.

2. Elektrische Maschine (2) nach Anspruch 1,
**dadurch gekennzeichnet, dass** das Düsenfeld zumindest eine Runddüse (26) und/oder zumindest ein Loch aufweist.

3. Elektrische Maschine (2) nach Anspruch 1 oder 2,
**dadurch gekennzeichnet, dass** das Düsenfeld zumindest eine Schlitzdüse (28) und/oder zumindest einen Schlitz aufweist.

4. Elektrische Maschine (2) nach Anspruch 3,
**dadurch gekennzeichnet, dass** die zumindest eine Schlitzdüse (28) und/oder der zumindest eine Schlitz jeweils axial verläuft.

5. Elektrische Maschine (2) nach einem der vorhergehenden Ansprüche, **dadurch gekennzeichnet, dass** der Einlasskanal (12) ausgehend von dem Kühlmitteleinlass (14) entlang seiner axialen Erstreckung in radialer Richtung verjüngend ausgestaltet ist.

6. Elektrische Maschine (2) nach einem der vorhergehenden Ansprüche, wobei die elektrische Maschine (2) ein Belüftungselement (30), insbesondere einen Lüfter, zum aktiven Erzeugen eines Kühlmittelstroms aufweist, wobei der Kühlmittelstrom auf den Kühlmitteleinlass (14) gerichtet ist.

7. Elektrische Maschine (2) nach einem der vorhergehenden Ansprüche, **dadurch gekennzeichnet, dass** der Stator (6) zusätzlich ein Gehäuse mit einer Gehäuseoberfläche, welche die Statoroberfläche (8) bildet, aufweist, wobei das Gehäuse das Blechpaket umgibt.

8. Verfahren zum Kühlen einer elektrischen Maschine (2) nach einem der Ansprüche 1 bis 7 umfassend die Schritte:
- Axiales Fördern eines Kühlmittelstroms mittels des Einlasskanals (12);
- Umlenken des Kühlmittelstroms in radiale Richtung durch das jeweilige Düsenfeld; wobei
- der Kühlmittelstrom aufgrund des Umlenkens durch das jeweilige Düsenfeld in eine Prallströmung auf der Statoroberfläche (8) übergeht und
- Umlenken des Kühlmittelstroms in axiale Richtung durch die Form der Rippen hin zum Kühlmittelauslass(24).

## Claims

1. Electric machine (2) comprising:
- a stator (6) with a stator surface (8) which has a laminated core;
- a cover (10) which surrounds the stator (6);
- an inlet channel (12) with a coolant inlet (14), wherein the inlet channel (12) is formed between the cover (10) and a wall (16) arranged between the cover (10) and the stator surface (8), said wall (16) extending axially from a first axial edge (18) up to a second axial edge (20) of the cover (10), wherein the wall (16) has a nozzle array;
- a cooling channel (22) with a coolant outlet (24), wherein the cooling channel (22) is formed between the wall (16) and the stator surface (8),
**characterised in that**
- the stator (6) has, on its periphery, at least one contour in the form of a longitudinal rib (32), wherein the nozzle array has at least one slot nozzle (28) and/or at least one slot, wherein the longitudinal rib (32) is arranged flush with the at least one slot nozzle (28) or the at least one slot; or
- the stator (6) has, on its periphery, at least one contour in the form of a needle rib (34), wherein the nozzle array has at least one circular nozzle (26) and/or at least one hole, wherein the needle rib (34) is arranged flush with the at least one circular nozzle (26) or the at least one hole.

2. Electric machine (2) according to claim 1,
**characterised in that** the nozzle array has at least one circular nozzle (26) and/or at least one hole.

3. Electric machine (2) according to claim 1 or 2,
**characterised in that** the nozzle array has at least one slot nozzle (28) and/or at least one slot.

4. Electric machine (2) according to claim 3,
**characterised in that** the at least one slot nozzle (28) and/or the at least one slot runs axially in each case.

5. Electric machine (2) according to one of the preceding claims, **characterised in that** the inlet channel (12), starting from the coolant inlet (14), is configured to taper along its axial extent in the radial direction.

6. Electric machine (2) according to one of the preceding claims, wherein the electric machine (2) has a ventilation element (30), in particular a fan, for active generation of a coolant flow, wherein the coolant flow is directed to the coolant inlet (14).

7. Electric machine (2) according to one of the preceding claims, **characterised in that** the stator (6) additionally has a housing with a housing surface which forms the stator surface (8), wherein the housing surrounds the laminated core.

8. Method of cooling an electric machine (2) according to one of claims 1 to 7, comprising the steps:
- axial conveyance of a coolant flow by means of the inlet channel (12);
- deflection of the coolant flow in the radial direction by the respective nozzle array; wherein
- because of the deflection by the respective nozzle array the coolant flow becomes an impingement flow on the stator surface (8) and
- deflection of the coolant flow in the axial direction to the coolant outlet (24) thanks to the shape of the ribs.

## Revendications

1. Machine (2) électrique comprenant :
- un stator (6) ayant une surface (8) de stator, qui a un paquet de tôles ;
- une enveloppe (10) qui entoure le stator (6) ;
- un canal (12) d'entrée ayant une entrée (14) pour du fluide réfrigérant,
le canal (12) d'entrée étant constitué entre l'enveloppe (10) et une paroi (16) qui est disposée entre l'enveloppe (10) et la surface (8) de stator et qui s'étend axialement d'un premier bord (18) axial jusqu'à un deuxième bord (20) axial de l'enveloppe (10), la paroi (16) ayant un champ de buses ;
- un canal (22) de refroidissement ayant une première sortie (24) pour du fluide réfrigérant, le canal (22) de refroidissement étant constitué entre la paroi (16) et la surface (8) de stator,
**caractérisée en ce que**
- le stator (6) a, sur le pourtour, au moins un contour sous la forme d'une nervure (32) longitudinale, le champ de buses ayant au moins une buse (28) en fente et/ou au moins une fente, la nervure (32) longitudinale étant alignée avec la au moins une buse (28) en fente ou la au moins une fente ou
- le stator (6) a, sur le pourtour, au moins un contour sous la forme d'une nervure (3) en aiguille, le champ de buses ayant au moins une buse (26) circulaire et/ou au moins un trou, la nervure (34) en aiguille étant alignée avec la au moins une buse (26) circulaire ou avec le au moins un trou.

2. Machine (2) électrique suivant la revendication 1, **caractérisée en ce que** le champ de buses a au moins une buse (26) circulaire et/ou au moins un trou.

3. Machine (2) électrique suivant la revendication 1 ou 2, **caractérisée en ce que** le champ de buses a au moins une buse (28) en fente et/ou au moins une fente.

4. Machine (2) électrique suivant la revendication 3, **caractérisée en ce que** la au moins une buse (28) en fente et/ou la au moins une fente s'étendent respectivement axialement.

5. Machine (2) électrique suivant l'une des revendications précédentes, **caractérisée en ce que** le canal (12) d'entrée se rétrécit dans la direction radiale en partant de l'entrée (14) pour du fluide réfrigérant le long de son étendue axiale.

6. Machine (2) électrique suivant l'une des revendications précédentes, dans laquelle la machine (2) électrique a un élément (30) d'alimentation en air , notamment un ventilateur, pour la production active d'un courant de fluide réfrigérant, le courant de fluide réfrigérant étant dirigé sur l'entrée (14) pour du fluide réfrigérant.

7. Machine (2) électrique suivant l'une des revendications précédentes, **caractérisé en ce que** le stator (6) a en outre une carcasse ayant une surface de carcasse qui forme la surface (8) de stator, la carcasse entourant le paquet de tôles.

8. Procédé de refroidissement d'une machine (2) électrique suivant l'une des revendications 1 à 7, comprenant les stades :
- on véhicule axialement un courant de fluide réfrigérant à l'aide du canal (12) d'entrée,
- on dévie le courant de fluide réfrigérant dans la direction radiale par le champ de buses, dans lequel
- le courant de fluide réfrigérant se transforme, en raison de la déviation par le champ de buses, en un courant de rebondissement sur la surface (8) du stator et
- on dévie le courant de fluide de refroidissement dans la direction axiale par la forme des nervures vers la sortie (24) pour du fluide réfrigérant.
